# EUROPÄISCHE PATENTANMELDUNG

(11) **EP 0 971 324 A1**
(43) Veröffentlichungstag der Anmeldung: **12.01.2000**
(21) Anmeldenummer: 98112441.5
(22) Anmeldetag: 06.07.1998
(51) Int. Cl.: G07F 7/08

(54) **Verfahren zum Schutz von Daten auf einem Datenträger sowie dazu ausgestaltete Chipkarte, Lesegerät und Chipsatz**

(71) Anmelder: Europay (Switzerland) SA, 8304 Wallisellen (CH)
(72) Erfinder: Eberle, Adrian, Emil, 6318 Walchwill (CH); Woollven, Jack, 8340 Hadlikon (CH)
(74) Vertreter: Blum, Rudolf Emil Ernst

(57) **Zusammenfassung**

Zur Sperrung einer Wertkarte (1) gegen unberechtigten Gebrauch wird nach Abgabe eines Sperrbefehls (14) ein Code (15) erzeugt und an einen Codeträger (10) abgegeben. Danach geht die Karte in den Sperrzustand. Die Sperre kann durch Zurückgabe des Codes (16) vom Codeträger (10) an die Karte (1) aufgehoben werden. Dadurch ist eine Sperrung und Entsperrung auf einfache Weise, ohne Verwendung des PIN-Codes möglich.

## Beschreibung

Die Erfindung betrifft ein Verfahren zum Schutz von Daten gemäss Oberbegriff des Anspruchs 1. Ferner betrifft die Erfindung einen Datenträger in Form einer Karte gemäss Anspruch 9, ein Lesegerät gemäss Anspruch 10 sowie einen Chipsatz für einen Datenträger gemäss Anspruch 11.

Datenträger, insbesondere kartenförmige Datenträger, welche einen Chipsatz beinhalten (sogenannte "smart cards"), können grundsätzlich zur Speicherung beliebiger Daten dienen. Bekannt ist die Funktion solcher Karten zum Beispiel als Speicher für geldwerte Daten, welche bei der Bezahlung einer Ware oder Dienstleistung von der Karte abgebucht werden, so dass die Karte als Ersatz für Geld in physischer Form, insbesondere als Ersatz für Kleingeld, dienen kann ("Electronic purse", Wertkarte). Der auf der Karte gespeicherte Betrag kann an entsprechend ausgestatteten Terminals erhöht bzw. die Karte wieder mit Geld aufgeladen werden; handelsübliche Lesegeräte z.B. in der Form von Schlüsselanhängern, erlauben das Lesen des noch auf der Karte gespeicherten Betrages. Die Abbuchung von geldwerten Daten erfolgt an speziellen Terminals an der Verkaufsstelle.

Eine Karte mit ungeschützter Chipfunktion bzw. Wertfunktion aus der Hand zu geben, kann für den Karteninhaber ein Risiko darstellen. Wenn der Inhaber einer Kreditkarte mit Wertfunktion (z.B. EUROCARD mit CASH-Chip) eine Kreditkarten-Imprinterzahlung durchführen will (z.B. im Restaurant), so muss er dazu seine Karte aus der Hand und oft auch aus seinem visuellen Überwachungsbereich geben. Es besteht dann die Möglichkeit, dass der Kreditkarten-Vertragspartner, bzw. dessen Hilfspersonen (zum Beispiel Kellner), mit der Karte nicht nur den erwarteten Kreditkarten-Slip erstellt und zur Unterschrift zurückbringt, sondern ausserhalb des visuellen Überwachungsbereichs des Karteninhabers und ohne dessen Zustimmung die ungeschützte Wertfunktion der Karte belastet (Diebstahl von elektronischem Wertkarten-Geld). Da der Karteninhaber bei Rückerhalt der Kreditkarte den Wertkartensaldo nicht unmittelbar einsehen wird, bemerkt er den Diebstahl erst später bzw. überhaupt nicht; zudem ist es kaum beweisbar, welcher Betrag vor der Weggabe der Karte gespeichert war.

Es ist bekannt, bei Wertkartenchips, bzw. bei mit solchen Chipsätzen bestückten Wertkarten, eine Sperrfunktion vorzusehen, welche auf dem persönlichen Benutzercode des Karteninhabers (sogenannter PIN-Code) basiert und mit der sich die Wertfunktion schützen lässt. Dazu steckt der Karteninhaber die Wertkarte (bzw. Kreditkarte mit Wertfunktionschip) in ein kleines, taschenrechnerähnliches Gerät, das er immer mit sich führen muss. Anschliessend drückt er die "Lock"-Taste. Das Gerät sendet dem Chip einen "Lock"-Befehl, worauf sich der Chip in einen Zustand versetzt, in dem keine Belastungen der Wertfunktion mehr möglich sind. (Die Lockfunktion ist bei diesem Gerät meist mit weiteren Funktionen kombiniert, z.B. Anzeige des Wertkartensaldos, Anzeige der letzten Wertkartenzahlungen). Der Karteninhaber kann nun die Karte gefahrlos aus der Hand geben. Niemand kann den Wertkartensaldo belasten, sofern er den PIN-Code der Karte nicht kennt. Nach Rückerhalt der Karte steckt der Karteninhaber die Karte wiederum in das Gerät und gibt auf der eingebauten Tastatur seinen PIN-Code ein. Das Gerät sendet dem Chip einen "unlock"-Befehl zusammen mit dem PIN-Code. Falls der PIN-Code stimmt, entsperrt sich der Chip, und die Wertfunktion ist wieder normal benützbar.

Obwohl im Prinzip tauglich, hat dieses Verfahren Nachteile. Der Vorgang ist für den Karteninhaber relativ umständlich (Eingabe des PIN-Codes). Er müsste das Verfahren im Prinzip vor bzw. nach jeder Kreditkarten-Imprinterzahlung durchführen. Ferner ist das Zusatzgerät relativ gross und teuer, weil es eine numerische Eingabetastatur haben muss. Weiter kann der PIN-Code von Umstehenden ausgespäht werden. Würde ein solcher "Späher" dem Karteninhaber anschliessend seine Kreditkarte stehlen, könnte er damit EFT/POS-Zahlungen, Bargeldbezüge bzw. Wertkartenladungen durchführen und damit den Kreditkarteninhaber bzw. das Kreditkartenunternehmen schädigen.

Der Erfindung liegt daher die Aufgabe zugrunde, ein Verfahren zu schaffen, welches den Schutz der Daten auf dem Datenträger, insbesondere einer Kreditkarte mit Wertfunktion, für den Benutzer einfacher und sicherer macht.

Diese Aufgabe wird bei einem Verfahren der eingangs genannten Art durch die kennzeichnenden Merkmale des Anspruchs 1 gelöst.

Dadurch, dass der zur Entsperrung dienende Code bei der Sperrung erzeugt und in einem vom Schutzobjekt, insbesondere der Wertfunktionskarte, getrennten Speichermittel aufbewahrt wird, steht dieser Code zur nachfolgenden Entsperrung auf diesem Speichermittel zur Verfügung, und auf die Eingabe des PIN-Codes kann verzichtet werden, wodurch der entsprechende Aufwand und das entsprechende Sicherheitsrisiko wegfällt.

Vorzugsweise wird der Code vom Schutzobjekt bzw. der Wertfunktionskarte selber erzeugt. In einer anderen Ausführungsform der Erfindung wird der Code von einem das Speichermittel enthaltenden Codeträger erzeugt und an die Karte abgegeben. Weiter ist es bevorzugt, wenn der Code bei jeder Sperrung neu erzeugt wird.

Der Erfindung liegt weiter die Aufgabe zugrunde, einen Datenträger vorzugsweise in Form einer Karte zu schaffen, bei welchem die genannten Nachteile nicht auftreten. Dies wird bei einem Datenträger der eingangs genannten Art mit den kennzeichnenden Merkmalen des Anspruchs 9 erreicht.

Ferner soll ein Lesegerät geschaffen werden, welches zur Durchführung des Verfahrens geeignet ist. Ein solches weist die kennzeichnenden Merkmale des Anspruchs 10 auf. Weiter ist ein Chipsatz zur Durchführung des Verfahrens durch die Merkmale des Anspruchs 11 gekennzeichnet.

Im folgenden werden Ausführungsbeispiele der Erfindung anhand der Zeichnungen näher erläutert. Dabei zeigt
Figur 1 eine schematische Darstellung von Datenträger und Lesegerät zur Sperrung und Entsperrung nach Stand der Technik,
Figur 2 eine schematische Darstellung ähnlich Figur 1 einer ersten Ausführungsform der Erfindung,
Figur 3 eine schematische Darstellung ähnlich Figur 1 einer weiteren Ausführungsform der Erfindung und
Figur 4 ein vereinfachtes Blockschema eines Datenträgers und eines Lesegerätes.

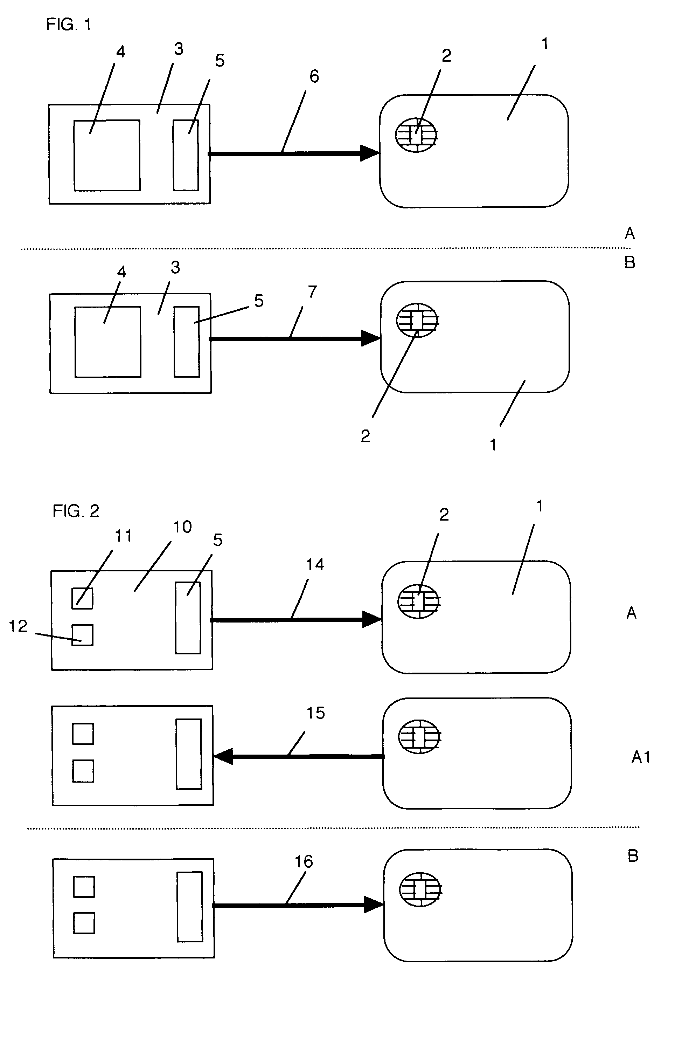

Figur 1 zeigt schematisch eine Wertkarte 1 nach Stand der Technik, welche mit einer elektronischen Datenverarbeitungs- und Speichereinheit 2 ("Chip") ausgerüstet ist, welche in bekannter Weise mit Daten, insbesondere mit geldwerten Daten, beschreibbar ist. In dieser bekannten Form kann die Karte 1 als Zahlungsmittel verwendet werden, indem in am Verkaufspunkt angeordneten Terminals der jeweils zu entrichtende Geldwert von der Karte abgebucht wird. In entsprechend ausgerüsteten anderen Terminals kann die Karte mit geldwerten Daten wieder aufgeladen werden. Wie bereits erwähnt, ist es bekannt, die Wertfunktion solcher Karten zu sperren, wobei diese dazu in ein Lesegerät 3 mit einer Tastatur 4 so eingeführt werden, dass die Kontaktanordnungen der Einheit 2 mit nicht dargestellten Kontaktanordnungen des Lesegeräts 3 in Kontakt treten. In der Figur 1 ist dies nur durch eine Pfeilverbindung zwischen der Karte 1 und dem Lesegerät 3 dargestellt. In Wirklichkeit wird die Karte 1 zum Zweck der Kontaktaufnahme mindestens ein Stück weit in das Lesegerät 3 hineingeschoben, was indes in der Zeichnung zur besseren Darstellung nicht gezeigt ist. Das Lesegerät weist ferner auf bekannte Weise eine Anzeige 5 auf, auf welcher zum Beispiel die Information von der Karte 1 ablesbar ist, wieviele geldwerte Einheiten sich noch auf der Karte befinden. Zur Sperrung der Karte wird nun nach Stand der Technik so vorgegangen, dass durch Betätigen einer entsprechenden Taste auf der Tastatur 4 ein Sperrbefehl 6 an die Karte abgegeben wird. Auf den Empfang dieses Sperrbefehls 6 hin sperrt sich die Karte so ab, dass auf die Wertfunktionen nicht mehr zugegriffen werden kann, d.h. es können auch keine geldwerten Einheiten von der Karte 1 abgebucht werden. Dieser Sperrschritt ist als Schritt A oberhalb der unterbrochenen Linie dargestellt. Unterhalb der unterbrochenen Linie ist als Schritt B das Entsperren der Karte 1 nach Stand der Technik dargestellt. Dazu wird auf der Tastatur 4 des Lesegerätes 3 der PIN-Code eingetippt und als Signal 7 an die Karte abgegeben. Auf den Empfang dieses PIN-Codes hin entsperrt sich die Karte 1 und kann wieder als Wertfunktionskarte verwendet werden. Das beschriebene Verfahren hat die in der Einleitung bereits erwähnten Nachteile.

Anhand von Figur 2 wird nun eine erste Ausführungsform des erfindungsgemässen Verfahrens erläutert. Dabei bezeichnen gleiche Bezugszeichen wie anhin gleiche Elemente, die Sperrschritte sind wiederum oberhalb der unterbrochenen Linie dargestellt und der Entsperrungsschritt B unterhalb der unterbrochenen Linie. Generell kann das erfindungsgemässe Verfahren so umschrieben werden, dass das Schutzobjekt 1, auf den Anstoss hin, sich zu schützen, ein Geheimnis erzeugt, welches an einen Geheimnisträger 10 abgegeben wird und nur dem Schutzobjekt und dem Geheimnisträger bekannt ist. Nach der Abgabe dieses Geheimnisses sperrt sich das Schutzobjekt 1. Zur Entsperrung des Schutzobjektes muss das Geheimnis vom Geheimnisträger 10 wieder zum Schutzobjekt 1 zurücktransferiert werden, was bei Übereinstimmung mit dem vorher abgegebenen Geheimnis zur Entsperrung führt. Die genauere Beschreibung des Ausführungsbeispiels von Figur 2 zeigt wiederum eine Wertfunktionskarte 1 mit einer Einheit 2, welche wiederum mit einem Lesegerät 10 in Verbindung steht. Auch in der Figur 2 ist die galvanische Kontaktaufnahme zwischen dem Lesegerät 10 und der Wertkarte 1 nicht dargestellt und der Austausch der elektrischen Signale wird nur durch die jeweiligen Pfeile 14 bis 16 symbolisiert. Auch hier wird davon ausgegangen, dass das Lesegerät 10 auf an sich bekannte Weise mit der Karte 1 in Kontakt tritt. Anstelle der an sich bekannten Kontaktnahme mit Kontaktstiften des Lesegerätes 10, welche auf Kontaktfelder der Einheit 2 einwirken, kann natürlich auch eine beliebig ausgestaltete kontaktlose Datenverbindung zwischen der Karte 1 und dem Lesegerät 10 bestehen, zum Beispiel auf induktiver oder kapazitiver Basis oder auch optischer Basis. Das Lesegerät 10 benötigt keine numerische Tastatur, mittels welcher ein PIN-Code eingegeben werden könnte, sondern z.B. in an sich bekannter Weise nur eine Taste 11, mittels welcher das Gerät einund ausgeschaltet werden kann. Bei eingeschaltetem Gerät werden beim Einführen der Karte sofort die Daten von der Karte 1 abgefragt und auf der Anzeigeeinheit 5 dargestellt, so insbesondere der Saldo der Karte. Es sind aber auch Lesegeräte bekannt, welche keine Taste 11 aufweisen und nur durch das Einführen der Karte aktiviert werden. Jedenfalls weist das Lesegerät nun eine Taste auf, im gezeigten Beispiel die Taste 12, mittels welcher ein Sperrbefehl 14 an die Karte abgegeben werden kann. Dies könnte z.B. aber auch durch mehrmaliges kurzes Betätigen der Taste 11 erfolgen. Der Anstoss zur Sperrung der Karte erfolgt somit durch den Inhaber der Karte, welcher diese in das Lesegerät 10 einführt und die entsprechende Taste betätigt. Dies wird zum Beispiel der Kreditkarteninhaber tun, bevor er die Kreditkarte 1 mit Wertkartenfunktion aus der Hand gibt. Bei Betätigung der Taste 12 sendet das Lesegerät 10 dem Wertfunktions-Chip einen Befehl 14. Beim Empfang des Sperrbefehls erzeugt die Einheit 2 einen Code 15, welcher ein Einmalpasswort zum Beispiel in Form einer bei jedem Anstoss neu berechneten Zufallszahl sein kann und speichert diesen Code auf dem Speicher der Karte 1 ab. Anschliessend gibt die Einheit 2 dieses Einmalpasswort an das Lesegerät ab, was mit dem Pfeil 15 in Figur 2 dargestellt wird. Das Passwort, bzw. der Code 15 wird im Lesegerät 10 in einem Speicher abgelegt. Nach der Abgabe des Codes 15 an das Lesegerät 10 sperrt sich die Karte 1 in an sich bekannter Weise so ab, dass auf die Wertfunktion nicht mehr zugegriffen werden kann. Der Kreditkarteninhaber kann nun die Karte aus der Hand geben, ohne dass deren gesperrte Funktionen einer Gefahr ausgesetzt sind, solange das Lesegerät 10, welches als Codeträger dient, in seinen Händen verbleibt. Zur Entsperrung der Karte 1 nach Rückerhalt derselben steckt sie der Kreditkarteninhaber wiederum in das Gerät 10. Dieses sendet entweder selbständig, oder nach erneutem Betätigen der Taste 12, den Code als Signal 16 wieder an die Karte 1 zurück. Diese prüft ob der von ihr empfangene Code 16 mit dem vormals als Code 15 ausgegebenen Code identisch ist und hebt, wenn dies der Fall ist, die Sperre auf, so dass die Karte wieder normal als Wertkarte verwendet werden kann.

Bevorzugterweise wird bei der Sperrung im Schritt A 1 nicht nur der Code 15 an das Lesegerät 10 abgegeben, sondern auch eine Identifikation der Karte 1, zum Beispiel deren Kartennummer, welche in der Einheit 2 gespeichert ist. Das Lesegerät 10 speichert dann beide Angaben zusammen in einer Tabelle ab. Diese Tabelle ermöglicht es dem Gerät 10, die Einmalpassworte bzw. - codes mehrerer Chipkarten gleichzeitig zu speichern und sie den einzelnen Chipkarten zuzuordnen. Sofern die Tabellengrösse überschritten wird, nimmt das Gerät keine weiteren Einträge entgegen, damit keine Einmalpassworte verloren gehen und somit bereits gesperrte Chipkarten nicht mehr entsperrt werden könnten. Weiter ist es bevorzugt, wenn das Gerät 10 bei der Sperrung der Karte 1 den fehlerfreien Erhalt und die korrekte Abspeicherung des Codes und allenfalls auch der Kartenidentifikation quittiert. Die Sperrfunktion der Karte 1 tritt dann nur im Falle einer positiven Quittierung in Funktion. Im Falle einer negativen Quittierung bricht die Karte 1 den Sperrvorgang ab und sperrt keine ihrer Funktionen. Dadurch wird verhindert, dass zum Beispiel bei einem Verbindungsunterbruch die Chipkarte gesperrt, das Einmalpasswort aber verloren und die Karte 1 somit nicht mehr entsperrbar ist. Weiter ist es bevorzugt, wenn die Karte 1 ihre Sperrung an das Gerät 10 zurückmeldet, worauf das Gerät 10 dem Kreditkarteninhaber den gesperrten Zustand der Karte 1 bestätigen kann, zum Beispiel über die Anzeige 5 oder über einen Signaltongenerator. Die Rückmeldung kann z.B. aus der Quittierung direkt abgeleitet werden.

In einer weiteren Ausführungsform kann die Karte 1 ferner so ausgestaltet sein, dass die Entsperrung zusätzlich auch über die Eingabe des PIN-Codes möglich ist, wie grundsätzlich aus dem Schritt B von Figur 1 bekannt. Damit kann sichergestellt werden, dass eine Entsperrung auch noch dann stattfinden kann, wenn das Gerät 10 verloren geht oder seinen Speicherinhalt verliert. Mit dieser zusätzlichen Funktion wird allerdings die Sperrung weniger sicher, da dann auch Unbefugte, die den PIN-Code kennen, die Karte jederzeit entsperren können.

Die gemäss der Erfindung gesperrte Karte kann von Unberechtigten ohne das Gerät 10 nicht mit ihrer Wertfunktion verwendet werden. Gegen Angriffe mit erschöpfender Suche nach dem zutreffenden Code kann sich die Karte 1 zum Beispiel durch einen entsprechend langen Code und/oder durch zeitliche Unterbrechungen zwischen zwei unkorrekten Code-Eingabeversuchen und/oder durch irreversible Sperrung nach einer gewissen Anzahl empfangener unkorrekter Code schützen.

Bei der korrekten Entsperrung quittiert bevorzugterweise die Karte 1 dem Lesegerät den korrekten Empfang des Codes und die erfolgreiche Verarbeitung desselben, woraufhin das Lesegerät 10 den Eintrag in der Tabelle löscht und dem Kreditkarteninhaber den entsperrten Zustand der Chipkarte anzeigt, was wiederum über die Anzeigeeinheit 5 oder einen Signaltongenerator erfolgen kann.

Der Code 15 wird bei dem gezeigten Beispiel von der Einheit 2 auf der Karte erzeugt. Dies kann zum Beispiel durch einen Zufallsgenerator auf der Karte erfolgen oder durch einen Zähler, welcher jeweils den zuvor benutzten Code um 1 oder mehr erhöht. Anstelle eines solchen, jeweils neu erzeugten Codes, kann grundsätzlich auch ein fest eingegebener Code auf der Karte 1 vorhanden sein, der jedesmal als gleichlautender Code ausgegeben wird. Diese letztere Lösung ist indes weniger sicher als die bevorzugte Erzeugung eines neuen Codes bei jeder Sperrung.

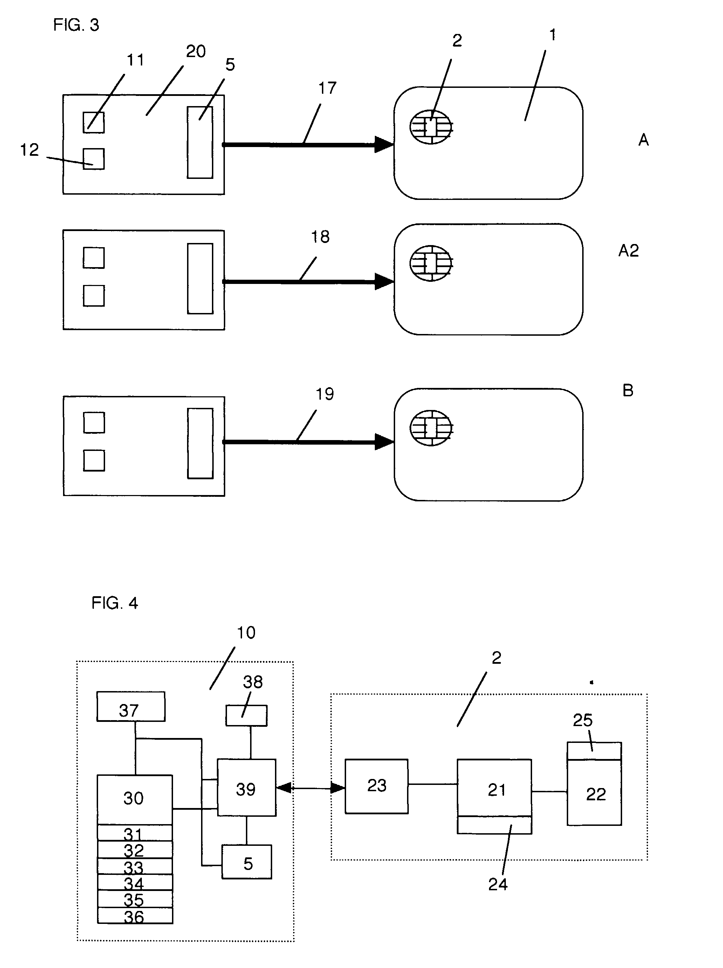

Figur 3 zeigt eine weitere Ausführungsform der Erfindung, wobei wiederum gleiche Bezugszeichen gleiche Elemente bezeichnen. Bei der Ausführungsform von Figur 3 wird ebenfalls zur Auslösung der Sperrung die Taste 12 betätigt, und der Sperrbefehl 17 an die Karte 1 abgegeben. Im Gegensatz zu dem anhand von Figur 2 beschriebenen Verfahren wird indes beim Verfahren gemäss Figur 3 der Code nicht von der Karte 1 erzeugt, sondern vom Lesegerät 20. Dieses speichert den Code bei sich ab und sendet ihn als Signal 18 an die Karte 1, wo der Code ebenfalls gespeichert wird. Danach geht die Karte 1 auf an sich bekannte Weise in die Sperre, in welcher nicht mehr auf die Karte 1 zugegriffen werden kann. Nach diesem Schritt A 2 ist die Sperrung abgeschlossen. Zur Entsperrung B wird die Karte 1 wiederum in Kontakt mit dem Lesegerät 20 gebracht und dieses sendet den Code erneut als Signal 19 an die Karte. Empfängt die Karte 1 dadurch den korrekten Code, so entsperrt sie sich wieder.

Auch bei dem Verfahren gemäss Figur 3 können natürlich die oben beschriebenen Quittierungsmeldungen, die Meldungen an den Karteninhaber und die verschiedenen Arten der Erzeugung des Codes verwendet werden.

Figur 4 zeigt in grobschematischer Form die Daten- und Speichereinheit 2 der Karte 1 sowie die Datenverarbeitungs- und Speichereinheit des Gerätes 10. Die Karte 1 weist dabei in an sich bekannter Weise eine Zentraleinheit 21 auf, welche über ein Interface 23 mit der Aussenwelt Daten austauschen kann und mit einem Speicher 22 verbunden ist. Der Speicher kann insbesondere ein Register 25 für die Kartennummer enthalten. Die Zentraleinheit 21 kann den Codegenerator 24 bilden, welcher zum Beispiel als Zufallszahlengenerator jeweils den Code erzeugt. Die Codeerzeugung kann indes auch durch einen Zähler erfolgen, welcher den jeweils vorher benutzten Code um einen gewissen Wert erhöht. Im Speicher kann in einer weiteren Ausführungsform auch ein Register für einen festen Code vorgesehen sein, der anstelle des jeweils neu erzeugten Codes verwendet wird, so dass das Element 24 nicht benötigt wird. Im Speicher 22 wird jeweils der erzeugte Code abgelegt und bei der Entsperrung mit dem über das Interface 23 zurückempfangenen Code verglichen. Das Lesegerät 10 weist im gezeigten Beispiel nur ein Interface 39 und einen Speicher auf, welche zusammen die Datenverarbeitung und Speicherung bilden. Natürlich könnte im Lesegerät 10 ebenfalls eine Zentraleinheit vorgesehen sein, welche dem Gerät allenfalls die Ausführung noch weiterer Funktionen ermöglichen würde. Neben den erwähnten Elementen sind eine Stromversorgung 37 in der Form einer Batterie, mindestens eine Taste 38 und die Anzeigeeinheit 5 vorgesehen. Der Speicher 30 beinhaltet die Tabelle mit dem jeweiligen Code 31 und der zugehörigen Kartennummer 32 bzw. den Code 33 und der Kartennummer 34 und allenfalls noch einen weiteren Code 35 und der zugehörigen Karte 36. Der entsprechende Chipsatz zur Bildung der Einheit 2 für die Karte 1 weist in diesem Beispiel also die Fähigkeit zur Erzeugung eines Codes auf und zum Vergleich dieses erzeugten Codes mit einem empfangenen Code zur Entsperrung der Karte. Bei einer anderen Ausführungsform, gemäss Figur 3, bei welcher der Code in dem Lesegerät erzeugt wird, weist der Chipsatz der Einheit 2 die entsprechende Fähigkeit zum Empfang eines Codes und Abspeicherung desselben vor der Sperrung der Karte auf sowie zum Vergleich eines nachher empfangenen Codes mit dem abgespeicherten Code. Der vom Lesegerät erzeugte und an die Karte 1 abgegebene Code wird dabei nur temporär im Register 25 der Karte gespeichert und spätestens bei der nächsten Sperrung durch den neuen Entsperrcode überschrieben.

Anstelle der beschriebenen, als Karten ausgeführten, Datenträger können natürlich auch andere Datenträger, die mit einer Datenverarbeitungs- und Speichereinheit versehen sind, auf die beschriebene Weise gegen unberechtigten vollen oder teilweisen Zugriff auf die gespeicherten Daten geschützt werden. Zu denken ist dabei insbesondere an auswechselbare Halbleiterspeicher (z.B. Flash-Memories) bei Computern. Die geschützten Daten sind natürlich nicht auf geldwerte Daten beschränkt, auch nicht bei der Ausgestaltung des Datenträgers als Kreditkarte. So könnten auf der Kreditkarte auch weitere schützenswerte Informationen gespeichert sein, so zum Beispiel Adress- und Telefoninformationen. Auch für diesen Fall kann es wichtig sein, diese Daten vor einer Weitergabe der Karte gegen unberechtigten Zugriff zu sperren.

Das beschriebene Verfahren ist besser als das nach Stand der Technik bekannte Sperrverfahren. Die Bedienung ist bequemer und schneller, und das verwendete Gerät ist einfacher, kompakter und preisgünstiger. Falls bevorzugterweise als Geheimnis ein Einmalpasswort, zum Beispiel eine Zufallszahl, anstelle eines statischen Wertes, insbesondere des PIN-Codes verwendet wird, kann das Geheimnis nicht gestohlen und später missbräuchlich eingesetzt werden. Es besteht insbesondere keine Gefahr, dass der PIN-Code des Karteninhabers ausgespäht werden kann. Das Schutzverfahren funktioniert insbesonders auch dann, wenn der Chipkarte gar kein PIN-Code zugeordnet ist. Natürlich können die Geräte 10, 20 neben der beschriebenen Schutzfunktion auch noch andere Funktionen ausführen, zum Beispiel auf bekannte Weise die Anzeige des Wertkartensaldos, der letzten Wertkartenzahlungen oder der Gültigkeitsdauer der Wertkarte.

## Patentansprüche

1. Verfahren zum Schutz von Daten, die auf einem mit einem Speicher versehenen Schutzobjekt (1) gespeichert sind, welches auf einen Sperrbefehl hin den Zugriff auf die Daten sperren kann, und welches die Sperrung nach Empfang eines Codes aufheben kann, dadurch gekennzeichnet, dass der zur Entsperrung dienende Code bei der Sperrung erzeugt oder ein vorgängig erzeugter Code abgerufen wird, und dass der Code im Schutzobjekt und in einem vom Schutzobjekt (1) getrennten Speichermittel (30 - 36) gespeichert wird.

2. Verfahren nach Anspruch 1, dadurch gekennzeichnet, dass bei der Sperrung der Code vom Schutzobjekt (1) selber erzeugt oder abgerufen wird und an einen das Speichermittel (30 - 36) enthaltenden Codeträger (10) übermittelt wird.

3. Verfahren nach Anspruch 1, dadurch gekennzeichnet, dass bei der Sperrung der Code von einem das Speichermittel enthaltenden Codeträger (20) erzeugt oder abgerufen und an das Schutzobjekt (1) übermittelt wird.

4. Verfahren nach einem der Ansprüche 1 bis 3, dadurch gekennzeichnet, dass bei jedem Sperrvorgang ein neuer Code erzeugt wird, insbesondere in der Form einer Zufallszahl.

5. Verfahren nach einem der Ansprüche 1 bis 4, dadurch gekennzeichnet, dass zusammen mit dem Code eine Identifikation des Schutzobjektes gespeichert wird.

6. Verfahren nach einem der Ansprüche 1 bis 5, dadurch gekennzeichnet, dass die Sperrung erst nach einer Quittierung der Speicherung erfolgt.

7. Verfahren nach einem der Ansprüche 1 bis 6, dadurch gekennzeichnet, dass das Schutzobjekt eine Kreditkarte mit Wertkartenfunktion oder eine Wertkarte ist.

8. Verfahren nach einem der Ansprüche 2 bis 7, dadurch gekennzeichnet, dass der Codeträger ein tragbares Lesegerät zum Lesen von Daten des Schutzobjektes ist, insbesondere ein tragbares Lesegerät für Wertkarten.

9. Datenträger, vorzugsweise in Form einer Karte (1), insbesondere Kreditkarte mit Wertkartenfunktion oder Wertkarte, mit einem auf Befehlseingabe sperrbaren Speicher (22), dessen Sperrung durch Eingabe eines Codes (16, 19) aufhebbar ist, dadurch gekennzeichnet, dass der Datenträger (1) zur Erzeugung, Speicherung und Ausgabe des Codes ausgestaltet ist, oder dass der Datenträger zum Empfang und zur temporären Speicherung des Codes ausgestaltet ist.

10. Lesegerät (10, 20), insbesondere als Schlüsselanhänger ausgestaltetes tragbares Lesegerät zur Datenkommunikation mit einem Datenträger in Form einer Karte, dadurch gekennzeichnet, dass das Lesegerät (10, 20) zur Abgabe eines Sperrbefehls (14) an die Karte, zur Speicherung eines von der Karte erzeugten Codes (15) und zur Übermittlung des gespeicherten Codes als Entsperrungscode (16) an die Karte ausgestaltet ist, oder dass das Lesegerät zur Abgabe eines Sperrbefehls (17) und zur Erzeugung und zur Abgabe eines Codes (18) an die Karte und zur Abgabe des Codes als Entsperrungscode (19) an die Karte ausgestaltet ist.

11. Chipsatz für einen Datenträger, insbesondere einen Datenträger in Form einer Karte, dadurch gekennzeichnet, dass der Chipsatz eine Speicher- und Datenverarbeitungselektronik (2) bildet, mittels welcher ein Code erzeugbar und ausgebbar ist, welcher bei erneutem Empfang als Entsperrungscode erkennbar ist.
